# EUROPEAN PATENT SPECIFICATION

(11) **EP 2 378 169 B1**
(45) Date of publication and mention of the grant of the patent: **26.08.2015**
(21) Application number: 09834602.6
(22) Date of filing: 07.10.2009
(51) Int. Cl.: F16J 15/08, F02F 11/00

(54) **SEAL STRUCTURE FOR OIL DROP HOLE IN CYLINDER HEAD GASKET**
DICHTUNGSSTRUKTUR FÜR EIN ÖLTROPFLOCH IN EINER ZYLINDERKOPFDICHTUNG
STRUCTURE DE JOINT POUR UN TROU DE GOUTTE D'HUILE DANS UN JOINT DE CULASSE

(30) Priority: 26.12.2008 JP 2008334237
(43) Date of publication of application: 19.10.2011
(73) Proprietor: Nippon Gasket Co., Ltd., Toyota-shi Aichi 471-0838 (JP)
(72) Inventor: TAKEDA Yasumaro, Toyota-shi Aichi 471-0838 (JP); KUSANO Masanori, Toyota-shi Aichi 471-0838 (JP)
(74) Representative: Naylor, Matthew John
(86) International application number: PCT/JP2009/067464
(87) International publication number: WO 2010/073796

(56) References cited:
- DE-B4- 10 196 542
- JP-A- 2001 173 791
- JP-A- 2001 182 615
- JP-A- 2001 295 941
- JP-A- 2001 295 941
- JP-A- 2003 293 857
- JP-A- 2004 197 799
- JP-A- 2004 239 369
- JP-A- 2004 293 738
- JP-A- 2008 014 334
- US-A1- 2002 105 148
- US-A1- 2006 131 818
- US-A1- 2008 023 923

## Description

### Technical Field

The present invention relates to a cylinder head gasket and, more particularly, to a seal structure for sealing oil drop holes provided in the cylinder head gasket.

### Background Art

Conventionally, a cylinder head gasket including at least two seal plates has been well-known, and for example, a cylinder head gasket described in Patent Literature 1 includes three seal plates.

It has also been conventionally well-known that an engine includes oil drop holes, and oil drop holes are formed also in the three seal plates, respectively although not described in Patent Literature 1. Additionally, this oil drop hole is formed in the respective seal plates to be sealed by a half bead that endlessly surrounds the oil drop hole.

It is to be noted that a gasket has been conventionally well-known in which a full bead and a half bead surrounding an exhaust passage are concentrically formed in one seal plate as a gasket for an exhaust manifold (Figure 3 in Patent Literature 2).

### Prior Art Documents

### Patent Literature

Patent Literature 1: Japanese Patent Laid-Open No. 2007-247631
Patent Literature 2: Japanese Patent Laid-Open No. 8-232759

JP 2001 295941A discloses a cylinder head gasket according to the preamble of claims 1 and 5 having combustion chamber holes surrounded by inner full beads and outer half beads with an endless shim straddling the full and half beads.

### Summary of Invention

### Problems to be Solved by the Invention

By the way, a cylinder head gasket is generally held between a cylinder head and a cylinder block by fastening the cylinder head and the cylinder block with fastening bolts.

At this time, a space between the cylinder head and the cylinder block becomes gradually larger toward an outside of an engine with the fastening bolts being as base points.

Although an endless half bead is provided around an oil drop hole to seal the oil drop hole in the cylinder head gasket in Patent Literature 1, when an opening amount between the cylinder head and the cylinder block becomes larger, an adhesion force of the half bead with the cylinder head or the cylinder block becomes smaller, and thereby oil leakage occurs.

Hence, conventionally, in an engine in which an opening amount between the cylinder head and the cylinder block outside the engine is large, it has been necessary to increase the number of seal plates according to the opening amount, causing increase of cost.

In view of such circumstances, the present invention provides a seal structure for an oil drop hole in a cylinder head gasket in which an adhesion force of a half bead with a cylinder head or a cylinder block can be increased to thereby improve sealing performance without increasing the number of seal plates.

### Means for Solving the Problems

Namely, the invention of claim 1 provides a seal structure for an oil drop hole in a cylinder head gasket including at least two first and second seal plates in which the oil drop holes are respectively perforated, wherein
on the first and second seal plates, half beads that endlessly surround the oil drop holes and that project in a direction toward each other to be mutually pressed are formed, and
outside of the respective half beads, auxiliary beads that project in a direction toward each other to be mutually pressed are further formed.

In addition, the invention of claim 5 provides a seal structure for an oil drop hole in a cylinder head gasket including at least two first and second seal plates in which the oil drop holes are respectively perforated, wherein
at a position overlapping with each other on the first and second seal plates, half beads that project in a direction away from each other to endlessly surround the oil drop holes are respectively formed, and
auxiliary beads that project in a direction away from each other are formed at a position overlapping with each other outside of the respective half beads.

### Advantageous Effects of Invention

When the cylinder head and the cylinder block are coupled to each other with fastening bolts which are not shown, in a state where the cylinder head gasket having the above-described configuration is held between the upper cylinder head and the lower cylinder block, a top portion of the upper half bead is made to adhere strongly to the cylinder head, and a top portion of the lower half bead is made to adhere strongly to the cylinder block. As a result of this, the oil drop holes are endlessly surrounded by the respective top portions of the respective half beads to thereby be sealed.

Simultaneously, when the auxiliary bead is held between the cylinder head and the lower cylinder block, the top portion of the upper half bead is subjected to an acting force to be pushed up by the auxiliary bead, and the top portion of the lower half bead is also subjected to an acting force to be pushed down by the auxiliary bead.

Consequently, even though a space between the cylinder head and the cylinder block becomes gradually larger toward an outside of an engine with the fastening bolts being as base points when the cylinder head and the cylinder block are fastened by the fastening bolts, the respective top portions of the respective half beads are successfully made to adhere to the cylinder head or the cylinder block by the acting force, thus enabling to secure a better sealing property as compared with a conventional cylinder head gasket.

### Brief Description of Drawings

[Figure 1] Figure 1 is a plan view showing a first embodiment of the present invention.
[Figure 2] Figure 2 is an enlarged plan view of a main part of Figure 1.
[Figure 3] Figure 3 is a cross-sectional view taken along a line III-III of Figure 2.
[Figure 4] Figure 4 is a cross-sectional view showing a second embodiment of the present invention.
[Figure 5] Figure 5 is an analysis result graph illustrating advantageous effects of the present invention.
[Figure 6] Figure 6 is a cross-sectional view showing a third embodiment of the present invention.
[Figure 7] Figure 7 is a cross-sectional view showing a fourth embodiment of the present invention.
[Figure 8] Figure 8 is a cross-sectional view showing a fifth embodiment of the present invention.
[Figure 9] Figure 9 is a cross-sectional view showing a sixth embodiment of the present invention.
[Figure 10] Figure 10 is a cross-sectional view showing a seventh embodiment of the present invention.
[Figure 11] Figure 11 is a cross-sectional view showing an eighth embodiment of the present invention.
[Figure 12] Figure 12 is a cross-sectional view showing a ninth embodiment of the present invention.

### Mode for Carrying out the Invention

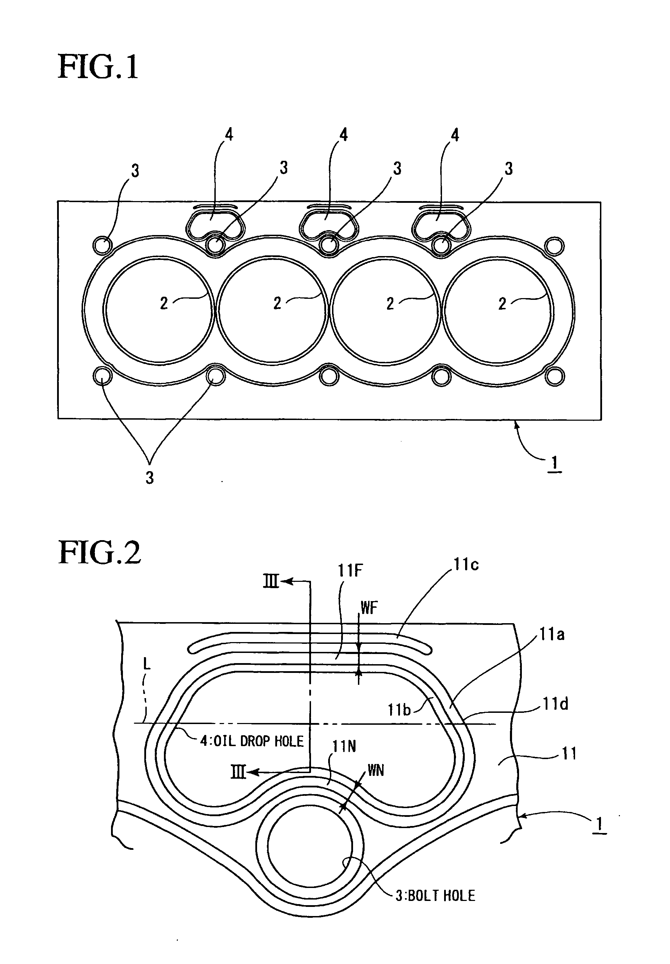

When embodiments of the present invention shown in drawings will be described hereinafter, in Figure 1, a cylinder head gasket 1 of the embodiment includes: four combustion chamber holes 2 arranged in line; a plurality of bolt holes 3 through which fastening bolts, which are not shown, are inserted; and a plurality of oil drop holes 4.

Since the bolt holes 3 are arranged so as to surround the respective combustion chamber holes 2 at four points, but the bolt holes 3 between the adjacent combustion chamber holes 2 and 2 are provided in common to both the combustion chamber holes 2 and 2, the bolt holes 3 are formed at a total of ten points.

In addition, the oil drop holes 4 are provided at three points on one side of a longitudinal direction of the cylinder head gasket 1, and on the outsides of the respective three bolt holes 3 provided in common to the adjacent combustion chamber holes 2 and 2 (on an opposite side to the combustion chamber holes).

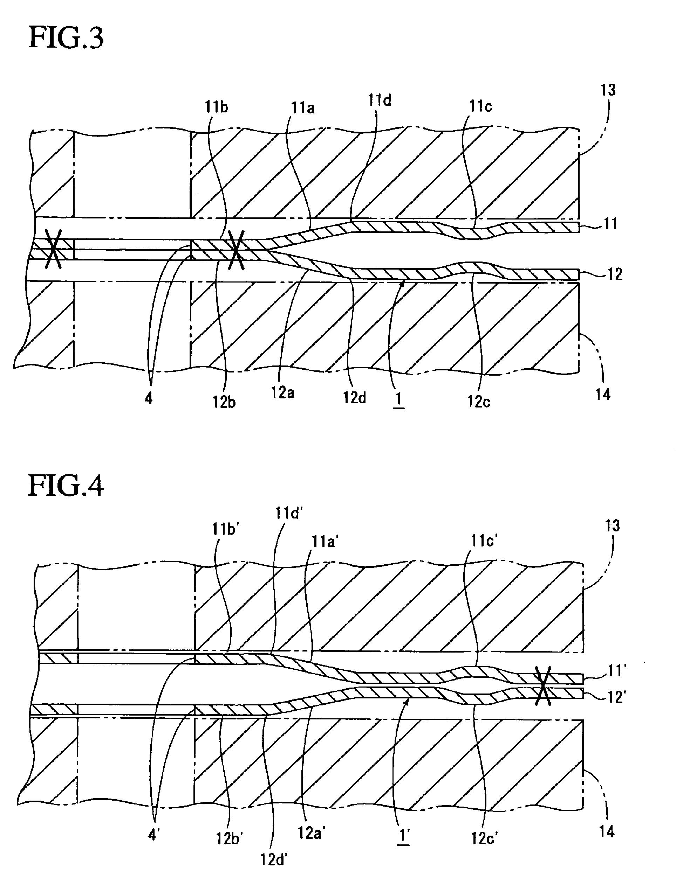

The cylinder head gasket 1 includes metallic first and second seal plates 11 and 12 as shown in Figure 3, and both the seal plates 11 and 12 are held between a cylinder head 13 and a cylinder block 14 to seal a space therebetween.

The oil drop holes 4 are perforated in the seal plates 11 and 12, respectively, and it goes without saying that the bolt holes 3 and the combustion chamber holes 2 are also perforated although not shown in Figure 3.

Half beads 11a and 12a that endlessly surround the oil drop holes 4 are formed, respectively in the respective seal plates 11 and 12 in order to seal the oil drop holes 4.

The first half bead 11a formed in the upper first seal plate 11 of a cylinder head 13 side projects toward the lower second seal plate 12, and the second half bead 12a formed in the lower second seal plate 12 of a cylinder block 14 side projects toward the upper first seal plate 11.

Hence, both the half beads 11a and 12a project in a direction toward each other, and surrounded portions 11b and 12b around the oil drop holes 4 surrounded by the respective half beads 11a and 12a are in contact with each other.

A portion 11F of the both half beads 11a and 12a far from the bolt hole 3 shown in Figure 2 projects more than a portion 11N near the bolt hole 3, whereby it is configured that the far portion 11F of the respective half beads 11a and 12a can follow an opening between the cylinder head 13 and the cylinder block 14 with an adhesion force larger than that in the near portion 11N.

More specifically, the far portion 11F of the respective half beads 11a and 12a is formed projecting more than the near portion 11N with a virtual line L being as a border in the embodiment shown in Figure 2, and a large projection amount of the far portion 11F and a small projection amount of the near portion 11N are formed to smoothly continue to each other in the virtual line L portion.

It is to be noted that a width WF of the far portion 11F of the respective half beads 11a and 12a is formed to be larger than a width WN of the near portion 11N instead of changing the projection amounts of the far portion 11F and the near portion 11N, and thereby follow property of the far portion 11F for the opening between the cylinder head 13 and the cylinder block 14 may be made to be larger than that of the near portion 11N.

At this time, the width WF of the far portion 11F may be formed larger than the width WN of the near portion 11N at the same time as the projection amount of the far portion 11F is made to be larger than that of the near portion 11N, and further, the above-described each setting may be provided in at least any of the half beads.

Further, in the respective seal plates 11 and 12, as shown in Figures 2 and 3, auxiliary beads 11c and 12c are formed along the half beads 11a and 12a, respectively at a position outside the respective half beads 11a and 12a and at the position of an opposite side of the bolt hole 3, i.e., at the position outside the cylinder head gasket 1 than the oil drop hole 4,

A cross section of the respective auxiliary beads 11c and 12c is formed to be circular in the embodiment, the first auxiliary bead 11c formed in the upper first seal plate 11 projects toward the lower second seal plate 12, and the second auxiliary bead 12c formed in the lower second seal plate 12 projects toward the upper first seal plate 11.

Hence, both the auxiliary beads 11c and 12c project in a direction toward each other to thereby mutually adhere.

In addition, in the embodiment, the surrounded portions 11b and 12b around the oil drop hole 4 are coupled with welding, adhesive, etc. as shown with a x mark in Figure 3. This coupled portion may be provided at a plurality of portions around the oil drop hole 4, or may be continuously endlessly formed.

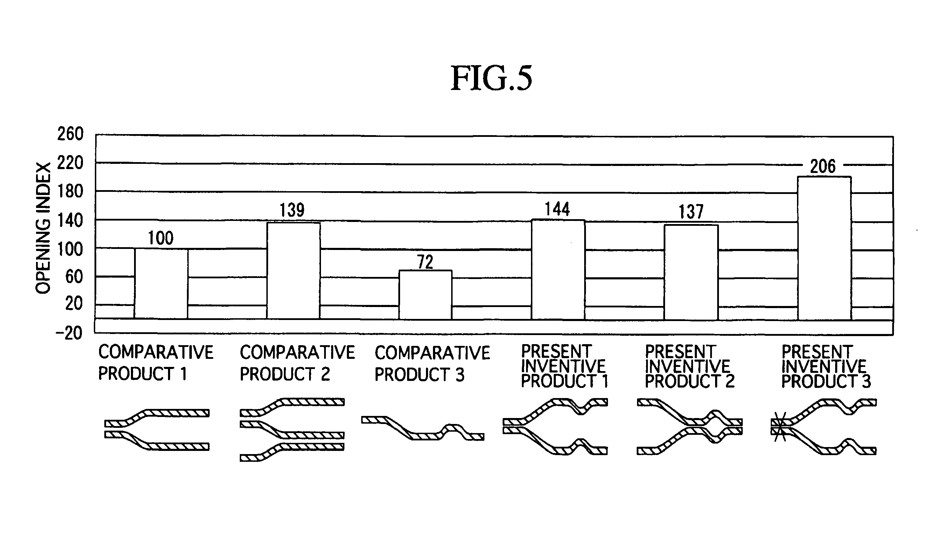

When both the seal plates 11 and 12 are held between the cylinder head 14 and the cylinder block 14, an inner peripheral portion of the oil drop hole 4 of the respective seal plates 11 and 12 is enlarged, but the enlargement can be suppressed when a surrounding area of the oil drop hole 4 is coupled as mentioned above, thus enabling to further improve the sealing property as shown with an analysis result in Figure 5, which will be described hereinafter.

It is to be noted that the present invention is not concerned with a configuration for sealing the combustion chamber hole 2, and that a conventionally well-known suitable configuration can be employed as the sealing configuration.

For example, such a configuration can be used that full beads, which will not be shown, that endlessly surround the combustion chamber hole 2 are formed in a direction away from each other in the respective seal plates 11 and 12, and that a shim plate for increasing a surface pressure around the combustion chamber hole 2 are arranged between the full beads.

In the above-described configuration, when the cylinder head 13 and the cylinder block 14 are coupled to each other with a fastening bolt, which is not shown, in a state where the cylinder head gasket 1 is held between the cylinder head 13 and the cylinder block 14, a top portion 11d of the upper half bead 11a is made to adhere strongly to the cylinder head 13, and a top portion 12d of the lower half bead 12a is made to adhere strongly to the cylinder block 13. As a result of this, the oil drop hole 4 is endlessly surrounded particularly by the respective top portions 11d and 12d of the respective half beads 11a and 12a to thereby be sealed.

Simultaneously, the auxiliary beads 11c and 12c are also pressed against each other. The top portion 11d of the upper half bead 11a is then subjected to an acting force to be pushed up by the lower auxiliary bead 12c, and the top portion 12d of the lower half bead 12a is subjected to an acting force to be pushed down by the upper auxiliary bead 11c.

Consequently, when the cylinder head 13 and the cylinder block 14 are fastened by the fastening bolt, even though a space between the cylinder head 13 and the cylinder block 14 becomes gradually larger toward the outside of the engine with the fastening bolt being as the base point, the respective top portions 11d and 12d of the respective half beads 11a and 12a are successfully made to adhere to the cylinder head 13 or the cylinder block 14 by the acting force, thus enabling to secure a better sealing property as compared with the conventional cylinder head gasket.

Figure 4 shows a second embodiment of the present invention, and a projection direction of the half beads 11a and 12a and that of the auxiliary beads 11c and 12c in the above-mentioned first embodiment are set to be reversed in the second embodiment.

Namely, in the second embodiment, a first half bead 11a' formed in an upper first seal plate 11' of the cylinder head 13 side upwardly projects toward the cylinder head 13 side, and a second half bead 12a' formed in a lower second seal plate 12' of the cylinder block 14 side downwardly projects toward the cylinder block 14. Hence, both the half beads 11a' and 12a' project in a direction away from each other.

On the other hand, a first auxiliary bead 11c' formed in the upper first seal plate 11' upwardly projects toward the cylinder head 13 side, and a second auxiliary bead 12c' formed in the lower second seal plate 12' downwardly projects toward the cylinder block 14. Hence, both the auxiliary beads 11c' and 12c' also project in a direction away from each other.

Further, in the embodiment, the first and second seal plate 11' and 12' are coupled to each other with welding, adhesive, etc. at a position outside the auxiliary beads 11c' and 12c' as shown with a x mark in Figure 4. This coupled portion may be provided at a plurality of portions at a position outside the auxiliary beads 11c' and 12c', or may be continuously linearly formed.

When both the seal plates 11 and 12 are held between the cylinder head 14 and the cylinder block 14, outside portions of the respective seal plates 11 and 12 are enlarged by making both the auxiliary beads 11c' and 12c' adhere to each other, but the enlargement can be suppressed when the outside portions are coupled, thus enabling to further improve the sealing property.

Other configurations are configured similar to the first embodiment, and portions equal to the first embodiment are indicated by applying " ' " to symbols used in the first embodiment.

In the above-described configuration of the second embodiment, when the cylinder head 13 and the cylinder block 14 are coupled to each other with a fastening bolt, which is not shown, in a state where the cylinder head gasket 1' is held between the cylinder head 13 and the cylinder block 14,

a top portion 11d' of the upper half bead 11a' is subjected to an acting force to be pushed up by the upper auxiliary bead 11c', and a top portion 12d' of the lower half bead 12a' is subjected to an acting force to be pushed down by the lower auxiliary bead 12c'.

Consequently, the respective top portions 11d and 12d of the respective half beads 11a and 12a are successfully made to adhere to the cylinder head 13 or the cylinder block 14 by the acting force, thus enabling to secure a better sealing property as compared with the conventional cylinder head gasket.

Figure 5 is an analysis result graph showing action effects of the present invention using 2DCAE.

Generally, when a temperature of the engine is raised, a space between the cylinder head 13 and the cylinder block 14 (an opening amount) in an outside portion of the engine is enlarged, and therefore, it was analyzed in the analysis that until what opening amount a sealing property of the oil drop hole 4 can be secured when gradually increasing the opening amount. Opening index sealing performance in Figure 5 is a relative index indicating that until what opening amount the present inventive products could secure a sealing property when an opening amount was set to be 100 at the time of a sealing property of a comparative product 1 corresponding to conventional technology having been impaired.

A present inventive product 3 used for this analysis has a configuration shown in Figure 3, and a present inventive product 1 is the product in which a coupling portion is omitted from the present inventive product 3, and in which the two seal plates 11 and 12 are simply overlapped with each other. In addition, a present inventive product 2 has a configuration shown in Figure 4, and the coupling portion thereof is also omitted.

Further, projection amounts and widths of the respective half beads 11a, 11a', 12a, and 12a' are not changed in any present inventive products 1 to 3, and they are set to be constant.

On the other hand, the comparative product 1 is the product using two seal plates, and it is made by simply forming only the half beads 11a and 12a in the two seal plates 11 and 12 shown in Figure 3. Namely, comparative products including comparative products described hereinafter do not include the coupling portion, and projection amounts and widths of the half beads are set to be constant.

A comparative product 2 is the product using three seal plates, and it is made by adding one seal plate under the two seal plates in the present inventive product shown in Figure 3 to make a half bead of the added seal plate project downwardly. Additionally, the auxiliary beads 11c and 12c are omitted in these three seal plates. Such configuration corresponds to the above-described configuration of Patent Literature 1.

Further, a comparative product 3 is the product using the only one seal plate 11. This configuration is the configuration in which the seal plate of the above-described Patent Literature 2 shown in Figure 3 is used as a cylinder head gasket by reversing a sealing side. Namely, although the seal plate of Patent Literature 2 shown in Figure 3 is used to seal an exhaust passage on the right side thereof, the seal plate of Patent Literature 2 shown in Figure 3 is used to seal the oil drop hole on the right side thereof in this analysis.

As is apparent from the analysis result in Figure 5, although the present inventive products 1 and 2 have only a few seal plates, i.e., two seal plates, respectively, a sealing property can be obtained until the opening amount reaches 144 or 137. Namely, as for the opening amount, 44% and 37% of improvement of sealing action can be obtained with respect to the comparative product 1 having the same number of seal plates as the present inventive products 1 and 2.

In addition, as compared with the comparative product 2 having three seal plates, although the present inventive products 1 and 2 have only a few seal plates, i.e., two seal plates, respectively, an approximately equal sealing property can be obtained.

Further, the best sealing property has been obtained in the present inventive product 3 in which the surrounding area of the oil drop hole 4 is fixed, and thus a sealing property far superior to the comparative products 1 and 2 can be obtained.

It is to be noted that as for the comparative product 3, only 72% of sealing property could be secured also with respect to the comparative product 1.

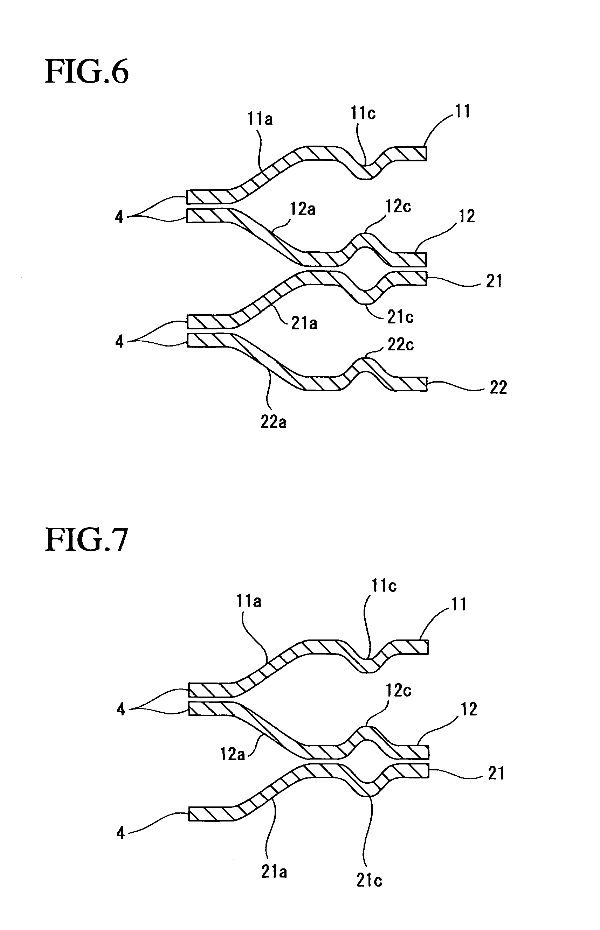

Figure 6 shows a third embodiment of the present invention. Although two seal plates 11 and 12 are used in the above-described first embodiment, four seal plates 11, 12, 21, and 22 overlapped with one another are used in the embodiment.

In the embodiment, two seal plates 11 and 12 respectively have the same configuration as the above-mentioned first embodiment, the third seal plate 21 has the same configuration as the above-described first seal plate 11, and the fourth seal plate 22 has the same configuration as the second seal plate 12.

Namely, the third embodiment has a configuration in which the two seal plates 11 and 12 in the first embodiment are made into one set, and two sets thereof are overlapped with each other.

Action effects equal to the above-described first embodiment can be obtained also in the embodiment, and particularly in the third embodiment, the sealing property of the oil drop hole can be successfully secured also in an engine having a larger opening amount than in the first embodiment.

Figure 7 shows a fourth embodiment of the present invention, in which the fourth seal plate 22 is omitted among the four seal plates 11, 12, 21, and 22 in the above-described third embodiment.

Namely, the fourth embodiment has a configuration in which the third seal plate 21 in which the oil drop hole 4 is perforated is overlapped with the second seal plate 12 in the above-described first embodiment, and a half bead 21a and an auxiliary bead 21c formed in this third seal plate 21 are formed at a position overlapping with the half bead 12a and the auxiliary bead 12c of the second seal plate 12 so as to project in a direction away from the half bead 12a and the auxiliary bead 12c of the second seal plate 12.

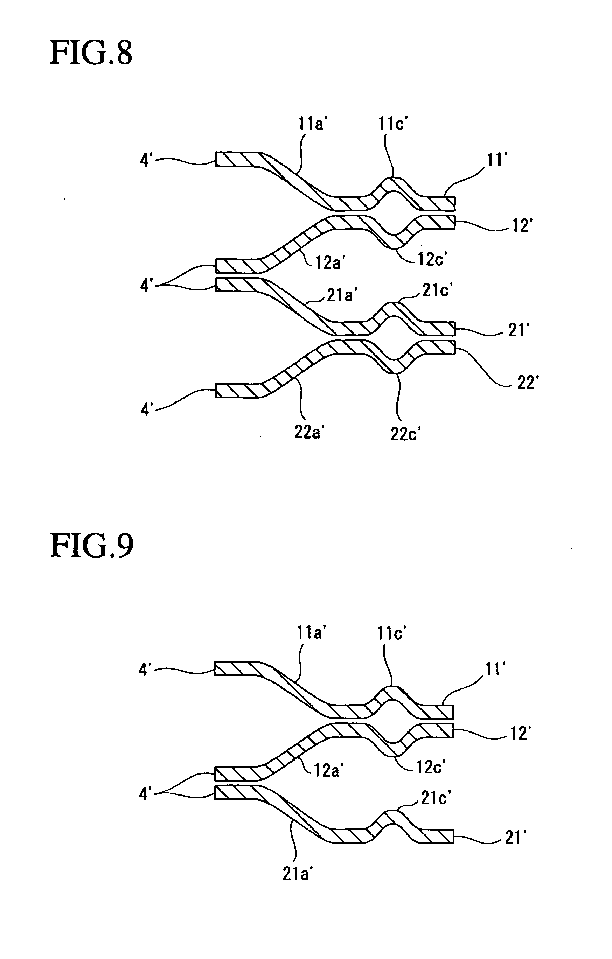

Figure 8 shows a fifth embodiment of the present invention. Although two seal plates 11' and 12' are used in the above-described second embodiment, four seal plates 11', 12', 21', and 22' overlapped with one another are used in the embodiment.

In the embodiment, the two seal plates 11' and 12' respectively have the same configuration as the above-mentioned second embodiment, the third seal plate 21' has the same configuration as the above-described first seal plate 11', and the fourth seal plate 22' has the same configuration as the second seal plate 12'.

Namely, the fifth embodiment has a configuration in which the two seal plates 11' and 12' in the second embodiment are made into one set, and two sets thereof are overlapped with each other.

Action effects equal to the above-described second embodiment can be obtained also in the embodiment, and particularly in the fifth embodiment, the sealing property of the oil drop hole can be successfully secured also in an engine having a larger opening amount than the second embodiment.

Figure 9 shows a sixth embodiment of the present invention, in which the fourth seal plate 22' is omitted among the four seal plates 11', 12', 21', and 22' in the above-described fifth embodiment.

Namely, the sixth embodiment has a configuration in which the third seal plate 21' in which an oil drop hole 4' is perforated is overlapped with the second seal plate 12' in the above-described second embodiment, and a half bead 21a' and an auxiliary bead 21c' formed in this third seal plate 21' are formed at a position overlapping with the half bead 12a' and the auxiliary bead 12c' of the second seal plate 12' so as to project in a direction toward the half bead 12a' and the auxiliary bead 12c' of the second seal plate 12'.

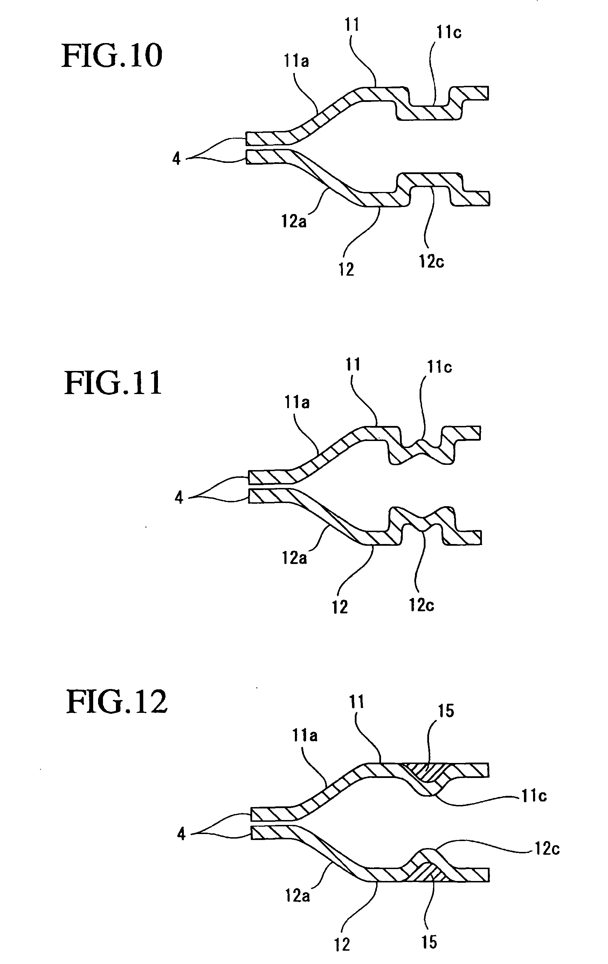

It is to be noted that cross sections of the respective auxiliary beads 11c and 12c are formed to be semicircular in the above-mentioned all embodiments, but they are not limited to this form. For example, the cross sections may be formed to be U-shaped as shown in Figure 10, or may be formed to be M- shaped as shown in Figure 11.

In addition, as shown in Figure 12, an inside of the auxiliary bead is filled with a filling material 15, such as a resin or rubber, to suppress sag of the each auxiliary bead also in the above-mentioned all embodiments.

Further, although each auxiliary bead is formed only at the outside portion of the cylinder head gasket outside the oil drop hole in the above-described each embodiment, the auxiliary bead may be endlessly formed surrounding the oil drop hole and the half bead.

### Reference Signs List

- 1: Cylinder head gasket
- 2: Combustion chamber hole
- 3: Bolt hole
- 4: Oil drop hole
- 11, 11', 12, 12', 21, 21', 22, 22': Seal plate
- 11a, 11a', 12a, 12a': Half bead
- 11c, 11c', 12c, 12c': Auxiliary bead
- 13: Cylinder head
- 14: Cylinder block
- 15: Filling material

## Claims

1. A cylinder head gasket (1) comprising at least two first and second seal plates (11, 12) in which oil drop holes (4) and bolt holes (3) are respectively perforated, the cylinder head gasket comprising a seal structure around the oil drop holes, wherein
the oil drop holes (4) are formed outside of the bolt holes (3), and wherein
on the first and second seal plates (11, 12), half beads (11a, 12a) that entirely surround the oil drop holes (4) and that project in a direction toward each other to be mutually pressed are formed, **characterised in that**:
outside of the respective half beads (11a, 12a), auxiliary beads (11c, 12c)that project in a direction toward each other to be mutually pressed are further formed; and
the auxiliary beads (11c, 11c', 12c, 12c') are formed at a position towards the outside of the cylinder head gasket on an opposite side of the oil drop holes (4) to the bolt holes (3).

2. The cylinder head gasket according to claim 1, wherein
third and fourth seal plates (21, 22) in which oil drop holes (4) are respectively provided are overlapped with the first and second seal plates (11, 12),
these third and fourth seal plates (21, 22) comprise half beads (21a, 22a) that entirely surround the oil drop holes (4), respectively, and that project in a direction toward each other to be mutually pressed, and
auxiliary beads (21c, 22c) that project in a direction toward each other to be mutually pressed are further formed outside of the respective half beads (21a, 22a) formed in the third and fourth seal plates (21, 22).

3. The cylinder head gasket according to claim 1, wherein a third seal plate (21) in which an oil drop hole (4) is perforated is overlapped with the second seal plate (12), a half bead (21a) and an auxiliary bead (21c) that entirely surround the oil drop hole (4) are formed in this third seal plate (21), and the half bead (21a) and the auxiliary bead (21c) of this third seal plate (21) are formed at a position overlapping with the half bead (12a) and the auxiliary bead (12c) of the second seal plate (12), respectively, so as to project in a direction away from the half bead (12a) and the auxiliary bead (12c) of the second seal plate (12).

4. The cylinder head gasket according to any one of claims 1 to 3, wherein the first and second seal plates (11, 12) are coupled to each other around the oil drop hole (4).

5. A cylinder head gasket (1') comprising at least two first and second seal plates (11', 12') in which oil drop holes and bolt holes (3) are respectively perforated, the cylinder head gasket comprising a seal structure around the oil drop holes, wherein
the oil drop holes (4) are formed outside of the bolt holes (3), and wherein
at a position overlapping with each other on the first and second seal plates (11', 12'), half beads (11a', 12a') that project in a direction away from each other to entirely surround the oil drop holes (4) are respectively formed, **characterised in that**:
auxiliary beads (11c', 12c') that project in a direction away from each other are further formed at a position overlapping with each other outside of the respective half beads (11a', 12a'); and
the auxiliary beads (11c, 11c', 12c, 12c') are formed at a position towards the outside of the cylinder head gasket on an opposite side of the oil drop holes (4) to the bolt holes(3).

6. The cylinder head gasket according to claim 5, wherein
third and fourth seal plates (21', 22') in which oil drop holes (4) are respectively provided are overlapped with the first and second seal plates (11', 12'),
these third and fourth seal plates (21', 22') comprise half beads (21a', 22a') at a position overlapping with each other that project in a direction away from each other to entirely surround the oil drop holes (4), respectively, and
auxiliary beads (21c', 22c') that project in a direction away from each other are further formed at a position overlapping with each other outside of the respective half beads (21a', 22a') formed in the third and fourth seal plates (21', 22').

7. The cylinder head gasket according to claim 5, wherein a third seal plate (21') in which an oil drop hole (4) is perforated is overlapped with the second seal plate (12), a half bead (21a') and an auxiliary bead (21c') that entirely surround the oil drop hole (4) are formed in this third seal plate (21'), and the half bead (21A') and the auxiliary bead (21C') of this third seal plate (21') are formed at a position overlapping with the half bead (12a') and the auxiliary bead (12c') of the second seal plate (12'), respectively, so as to project in a direction toward the half bead (12a') and the auxiliary bead (12c') of the second seal plate (12'), respectively.

8. The seal structure according to any of claims 5 to 7, wherein the first and second seal plates (11', 12') are coupled to each other at a position outside of the auxiliary beads (11c', 12c').

9. The seal structure according to any of the preceding claims, wherein in at least any of the half beads 11a, 11a', 12a, 12a'), a portion (11F) far from the bolt holes (3) projects more than a portion (11N) near them.

10. The seal structure according to any of the preceding claims, wherein in at least any of the half beads (11a, 11a', 12a, 12a'), a width of a portion (11F) far from the bolt holes (3) is formed larger than that of a portion (11N) near them.

11. The seal structure according to any of the preceding claims, wherein a cross section of the auxiliary bead (11c, 11c', 12c, 12c') is formed to be semicircular.

12. The seal structure according to any of claims 1 to 10, wherein a cross section of the auxiliary bead (11c, 11c', 12c, 12c') is formed to be U-shaped.

13. The seal structure according to any of claims 1 to 10, wherein a cross section of the auxiliary bead (11c, 11c', 12c, 12c') is formed to be M-shaped.

14. The seal structure according to any of the preceding claims, wherein an inside of the auxiliary bead (11c, 11c', 12c, 12c') is filled with a filling material (15), such as a resin or rubber.

## Patentansprüche

1. Zylinderkopfdichtung (1), welche mindestens zwei erste und zweite Dichtungsplatten (11, 12) umfasst, in denen jeweils Öltropflöcher (4) und Bolzenlöcher (3) ausgenommen sind, wobei die Zylinderkopfdichtung eine Dichtungsstruktur rund um die Öltropflöcher umfasst, worin
die Öltropflöcher (4) außerhalb der Bolzenlöcher (3) ausgebildet sind, und worin
auf der ersten und zweiten Dichtungsplatte (11, 12) Halbsicken (11a, 12a) ausgebildet sind, welche die Öltropflöcher (4) vollständig umgeben und in eine Richtung zueinander hervorstehen, um gegeneinander verpresst zu werden, **dadurch gekennzeichnet, dass**:
außerhalb der jeweiligen Halbsicken (11a, 12a) ferner Hilfssicken (11 c, 12c) ausgebildet sind, die in eine Richtung zueinander hervorstehen, um gegeneinander verpresst zu werden; und
die Hilfssicken (11 c, 11 c', 12c, 12c') an einer Position in Richtung zur Außenseite der Zylinderkopfdichtung hin auf einer zu den Bolzenlöchern (3) entgegengesetzten Seite der Öltropflöcher (4) ausgebildet sind.

2. Zylinderkopfdichtung nach Anspruch 1, worin
eine dritte und vierte Dichtungsplatte (21,22), in denen jeweils Öltropflöcher (4) bereitgestellt sind, mit der ersten und zweiten Dichtungsplatte (11, 12) überlappend angeordnet sind,
diese dritte und vierte Dichtungsplatte (21, 22) Halbsicken umfassen (21 a, 22a), welche die Öltropflöcher (4) jeweils vollständig umgeben und in eine Richtung zueinander hervorstehen, um gegeneinander verpresst zu werden, und
Hilfssicken (21 c, 22c), die in eine Richtung zueinander hervorstehen, um gegeneinander verpresst zu werden, ferner außerhalb der entsprechenden, in der dritten und vierten Dichtungsplatte (21, 22) ausgebildeten Halbsicken (21 a, 22a) ausgebildet sind.

3. Zylinderkopfdichtung nach Anspruch 1, worin eine dritte Dichtungsplatte (21), in der ein Öltropfloch (4) ausgenommen ist, mit der zweiten Dichtungsplatte (12) überlappend angeordnet ist, eine Halbsicke (21 a) und eine Hilfssicke (21 c), die das Öltropfloch (4) vollständig umgeben, in dieser dritten Dichtungsplatte (21) ausgebildet sind und die Halbsicke (21 a) und die Hilfssicke (21 c) dieser dritten Dichtungsplatte (21) an einer Position ausgebildet sind, die mit der Halbsicke (12a) beziehungsweise der Hilfssicke (12c) der zweiten Dichtungsplatte (12) überlappend angeordnet sind.

4. Zylinderkopfdichtung nach irgendeinem der Ansprüche 1 bis 3, worin die erste und zweite Dichtungsplatte (11, 12) miteinander rund um das Öltropfloch (4) verbunden sind.

5. Zylinderkopfdichtung (1'), welche zumindest zwei erste und zweite Dichtungsplatten (11', 12') umfasst, in denen jeweils Öltropflöcher und Bolzenlöcher (3) aufgenommen sind, wobei die Zylinderkopfdichtung eine Dichtungsstruktur rund um die Öltropflöcher umfasst, worin
die Öltropflöcher (4) außerhalb der Bolzenlöcher (3) ausgebildet sind und worin
Halbsicken (11a', 12a'), die in eine Richtung voneinander weg hervorstehen, um die Öltropflöcher (4) vollständig zu umgeben, jeweils an einer Position ausgebildet sind, an der sie einander auf der ersten und zweiten Dichtungsplatte (11', 12') überlappen, **dadurch gekennzeichnet, dass**:
Hilfssicken (11c', 12c'), die in eine Richtung voneinander weg hervorstehen, ferner an einer Position ausgebildet werden, an der sie einander außerhalb der jeweiligen Halbsicken (11a', 12a') überlappen; und
die Hilfssicken (11c, 11 c', 12c, 12c') an einer Position in Richtung zur Außenseite der Zylinderkopfdichtung hin auf einer zu den Bolzenlöchern (3) entgegengesetzten Seite der Öltropflöcher (4) ausgebildet sind.

6. Zylinderkopfdichtung nach Anspruch 5, worin die dritte und vierte Dichtungsplatte (21', 22'), in denen jeweils Öltropflöcher (4) bereitgestellt werden, mit der ersten und zweiten Dichtungsplatte (11', 12') überlappend angeordnet sind,
wobei diese dritte und vierte Dichtungsplatte (21', 22') Halbsicken (21a', 22a') an einer Position umfassen, an denen sie einander überlappen, die in eine Richtung weg voneinander hervorstehen, um jeweils die Öltropflöcher (4) vollständig zu umgeben, und
Hilfssicken (21 c', 22c'), die in eine Richtung weg voneinander hervorstehen, ferner an einer Position ausgebildet sind, an der sie einander außerhalb der jeweiligen, in der dritten und vierten Dichtungsplatte (21', 22') ausgebildeten Halbsicken (21a', 22a') überlappen.

7. Zylinderkopfdichtung nach Anspruch 5, worin eine dritte Dichtungsplatte (21'), in der ein Öltropfloch (4) ausgenommen ist, mit der zweiten Dichtungsplatte (12) überlappend angeordnet ist, eine Halbsicke (21a') und eine Hilfssicke (21c'), welche das Öltropfloch (4) vollständig umgeben, in dieser dritten Dichtungsplatte (21') ausgebildet sind, und die Halbsicke (21a') und die Hilfssicke (21c') dieser dritten Dichtungsplatte (21') an einer Position ausgebildet sind, wo sie einander mit der Halbsicke (12a') beziehungsweise der Hilfssicke (12c') der zweiten Dichtungsplatte (12') überlappen, um in eine Richtung hin zur Halbsicke (12a') beziehungsweise zur Hilfssicke (12c') der zweiten Dichtungsplatte (12') hervorzustehen.

8. Dichtungsstruktur nach irgendeinem der Ansprüche 5 bis 7, worin die erste und zweite Dichtungsplatte (11', 12') an einer Position außerhalb der Hilfssicken (11c', 12c') miteinander verbunden sind.

9. Dichtungsstruktur nach irgendeinem der vorangehenden Ansprüche, worin in zumindest einer der Halbsicken 11 a, 11 a', 12a, 12a' ein von den Bolzenlöchern (3) entfernter Abschnitt (11F) stärker als ein Abschnitt (11N) in deren Nähe hervorsteht.

10. Dichtungsstruktur nach irgendeinem der vorangehenden Ansprüche, worin in zumindest einer beliebigen der Halbsicken (11 a, 11a', 12a, 12a') eine Breite eines von den Bolzenlöchern (3) entfernten Abschnitts (11F) breiter ausgebildet ist als die eines Abschnitts (11N) in deren Nähe.

11. Dichtungsstruktur nach irgendeinem der vorangehenden Ansprüche, worin ein Querschnitt der Hilfssicke (11 c, 11 c', 12c, 12c') halbkreisförmig ausgebildet ist.

12. Dichtungsstruktur nach irgendeinem der Ansprüche 1 bis 10, worin ein Querschnitt der Hilfssicke (11c, 11c', 12c, 12c') U-förmig ausgebildet ist.

13. Dichtungsstruktur nach irgendeinem der Ansprüche 1 bis 10, worin ein Querschnitt der Hilfssicke (11c, 11c', 12c, 12c') M-förmig ausgebildet ist.

14. Dichtungsstruktur nach irgendeinem der vorangehenden Ansprüche, worin eine Innenseite der Hilfssicke (11c, 11c', 12c, 12c') mit einem Füllmaterial (15) wie z.B. einem Harz oder Gummi gefüllt ist.

## Revendications

1. Joint de culasse (1) comprenant au moins deux premières et deuxièmes plaques de joint (11, 12) dans lesquelles des trous de goutte d'huile (4) et des trous de boulon (3) sont respectivement perforés, le joint de culasse comprenant une structure de joint autour des trous de goutte d'huile, dans lequel :
les trous de goutte d'huile (4) sont formés à l'extérieur des trous de boulon (3), et dans lequel :
sur les première et deuxième plaques de joint (11, 12), on forme des demi-bourrelets (11a 12a) qui entourent entièrement les trous de goutte d'huile (4) et qui font saillie dans une direction l'un vers l'autre pour être mutuellement comprimés, **caractérisé en ce que** :
à l'extérieur des demi-bourrelets (11a, 12a) respectifs, on forme en outre des bourrelets auxiliaires (11c, 12c) qui font saillie dans une direction l'un vers l'autre pour être mutuellement comprimés ; et
les bourrelets auxiliaires (11c, 11c', 12c, 12c') sont formés dans une position vers l'extérieur du joint de culasse sur un côté opposé aux trous de goutte d'huile (4) par rapport aux trous de boulon (3).

2. Joint de culasse selon la revendication 1, dans lequel :
les troisième et quatrième plaques de joint (21, 22) dans lesquelles les trous de goutte d'huile (4) sont respectivement prévus, recouvrent les première et deuxième plaques de joint (11, 12),
ces troisième et quatrième plaques de joint (21, 22) comprennent des demi-bourrelets (21a, 22a) qui entourent entièrement les trous de goutte d'huile (4), respectivement, et qui font saillie dans une direction l'un vers l'autre afin d'être mutuellement comprimés, et
on forme en outre des bourrelets auxiliaires (21c, 22c) qui font saillie dans une direction l'un vers l'autre pour être mutuellement comprimés, à l'extérieur des demi-bourrelets (21a, 22a) respectifs formés dans les troisième et quatrième plaques de joint (21, 22).

3. Joint de culasse selon la revendication 1, dans lequel une troisième plaque de joint (21) dans laquelle un trou de goutte d'huile (4) est perforé, recouvre la deuxième plaque de joint (12), un demi-bourrelet (21a) et un bourrelet auxiliaire (21c) qui entourent entièrement le trou de goutte d'huile (4) sont formés dans cette troisième plaque de joint (21), et le demi-bourrelet (21a) et le bourrelet auxiliaire (21c) de cette troisième plaque de joint (21) sont formés dans une position recouvrant le demi-bourrelet (12a) et le bourrelet auxiliaire (12c) de la deuxième plaque de joint (12) respectivement, afin de faire saillie dans une direction à distance du demi-bourrelet (12a) et du bourrelet auxiliaire (12c) de la deuxième plaque de joint (12).

4. Joint de culasse selon l'une quelconque des revendications 1 à 3, dans lequel les première et deuxième plaques de joint (11, 12) sont couplées entre elles autour du trou de goutte d'huile (4).

5. Joint de culasse (1') comprenant au moins deux premières et deuxièmes plaques de joint (11', 12') dans lesquelles des trous de goutte d'huile et des trous de boulon (3) sont respectivement perforés, le joint de culasse comprenant une structure de joint autour des trous de goutte d'huile, dans lequel :
les trous de goutte d'huile (4) sont formés à l'extérieur des trous de boulon (3), et dans lequel :
dans une position recouvrant les première et deuxième plaques de joint (11', 12'), les demi-bourrelets (11a', 12a') qui font saillie dans une direction à distance l'un de l'autre pour entourer entièrement les trous de goutte d'huile (4), sont respectivement formés, **caractérisé en ce que** :
des bourrelets auxiliaires (11c', 12c') qui font saillie dans une direction à distance l'un de l'autre, sont en outre formés dans une position chevauchante à l'extérieur des demi-bourrelets (11a', 12a') respectifs ; et
les bourrelets auxiliaires (11c, 11c', 12c, 12c') sont formés dans une position vers l'extérieur du joint de culasse sur un côté opposé des trous de goutte d'huile (4) par rapport aux trous de boulon (3).

6. Joint de culasse selon la revendication 5, dans lequel :
les troisième et quatrième plaques de joint (21', 22') dans lesquelles les trous de goutte d'huile (4) sont respectivement prévus, recouvrent les première et deuxième plaques de joint (11', 12'),
ces troisième et quatrième plaques de joint (21', 22') comprennent des demi-bourrelets (21a', 22a') dans une position chevauchante, qui font saillie dans une direction à distance l'un de l'autre pour entourer entièrement les trous de goutte d'huile (4), respectivement, et
des bourrelets auxiliaires (21c', 22c') qui font saillie dans une direction à distance l'un de l'autre, sont en outre formés dans une position chevauchante, à l'extérieur des demi-bourrelets (21a', 22a') respectifs formés dans les troisième et quatrième plaques de joint (21', 22').

7. Joint de culasse selon la revendication 5, dans lequel la troisième plaque de joint (21') dans laquelle un trou de goutte d'huile (4) est perforé, recouvre la deuxième plaque de joint (12), un demi-bourrelet (21a') et un bourrelet auxiliaire (21c') qui entourent entièrement le trou de goutte d'huile (4), sont formés dans cette troisième plaque de joint (21'), et le demi-bourrelet (21A') et le bourrelet auxiliaire (21C') sur cette troisième plaque de joint (21') sont formés dans une position recouvrant le demi-bourrelet (12a') et le bourrelet auxiliaire (12c') de la deuxième plaque de joint (12'), respectivement, afin de faire saillie dans une direction vers le demi-bourrelet (12a') et le bourrelet auxiliaire (12c') de la deuxième plaque de joint (12'), respectivement.

8. Structure de joint selon l'une quelconque des revendications 5 à 7, dans laquelle les première et deuxième plaques de joint (11', 12') sont couplées entre elles dans une position à l'extérieur des bourrelets auxiliaires (11c', 12c').

9. Structure de joint selon l'une quelconque des revendications précédentes, dans laquelle, dans au moins l'un quelconque des demi-bourrelets (11a, 11a', 12a, 12a'), une partie (11F) éloignée des trous de boulon (3) fait davantage saillie qu'une partie (11N) à proximité de ces derniers.

10. Structure de joint selon l'une quelconque des revendications précédentes, dans laquelle, dans au moins l'un quelconque des demi-bourrelets (11a 11a', 12a, 12a'), une largeur d'une partie (11F) éloignée des trous de boulon (3), est plus grande que celle d'une partie (11N) à proximité de ces derniers.

11. Structure de joint selon l'une quelconque des revendications précédentes, dans laquelle une section transversale du bourrelet auxiliaire (11c, 11c', 12c, 12c') est formée pour être semi-circulaire.

12. Structure de joint selon l'une quelconque des revendications 1 à 10, dans laquelle une section transversale du bourrelet auxiliaire (11c, 11c', 12c, 12c') est formée pour être en forme de U.

13. Structure de joint selon l'une quelconque des revendications 1 à 10, dans laquelle une section transversale du bourrelet auxiliaire (11c, 11c', 12c, 12c') est formée pour être en forme de M.

14. Structure de joint selon l'une quelconque des revendications précédentes, dans laquelle un intérieur du bourrelet auxiliaire (11c, 11c', 12c, 12c') est rempli avec un matériau de remplissage (15), tel qu'une résine ou du caoutchouc.
